Europäisches Patentamt

European Patent Office

Office européen des brevets

(19)

(11) Veröffentlichungsnummer: **0 340 514 B1**

(12) # EUROPÄISCHE PATENTSCHRIFT

(45) Veröffentlichungstag der Patentschrift :
07.08.91 Patentblatt 91/32

(51) Int. Cl.⁵ : **A01D 17/10, B65G 15/52**

(21) Anmeldenummer : 89106834.8

(22) Anmeldetag : 17.04.89

(54) Stabband für Stabbandförderer.

(30) Priorität : 04.05.88 DE 3815115
06.02.89 DE 3903475

(43) Veröffentlichungstag der Anmeldung :
08.11.89 Patentblatt 89/45

(45) Bekanntmachung des Hinweises auf die
Patenterteilung :
07.08.91 Patentblatt 91/32

(84) Benannte Vertragsstaaten :
AT BE CH DE ES FR GB GR IT LI LU NL SE

(56) Entgegenhaltungen :
DD-A- 76 628
DD-A- 214 752
DE-A- 2 421 366
DE-B- 2 820 185

(73) Patentinhaber : Jäger, Arnold
Gehrbergsweg 6A
W-3167 Burgdorf - Ramlingen (DE)

(72) Erfinder : Jäger, Andreas
Gehrbergsweg 6
W-3167 Burgdorf (DE)
Erfinder : Röhrs, Friederich
Am Kiepenberge 11
W-3100 Celle (DE)

(74) Vertreter : Depmeyer, Lothar
Auf der Höchte 30
W-3008 Garbsen 1 (DE)

## Beschreibung

Die Erfindung betrifft ein Stabband nach dem Gattungsbegriff des 1. Patentanspruchs.

Stabbandförderer dieser Art werden bei Erntemaschinen eingesetzt, sie können dabei nicht nur der eigentlichen Förderung des Erntegutes, sondern auch der Siebung dienen, weil die Stäbe mit gegenseitigem Abstand angeordnet sind. Die Stabbänder können darüber hinaus durch Eingriff von Zahnrädern zwischen die Stäbe, aber auch durch eine Innenverzahnung ihrer Bänder angetrieben werden.

Bei den bekannten Stabbändern der eingangs erwähnten Art (DE-A-2820185) sind die Befestigungselemente Niete, deren Köpfe jeweils aussen an einem die Stäbe übergreifenden Bügel und innen am Band anliegen und vorgestanzte Löcher im Bandkörper durchsetzen. Die Anbringung dieser Löcher schwächt nicht nur den Bandkörper, vielmehr sind auch die Stanzung der Löcher und die Nietung sehr umständlich.

Weiterhin sind krampenartige, u-förmige Befestigungselemente für die Stäbe von Stabbändern bekannt (DD-A-214752), die von der Bandrückseite aus eingetrieben sind und den Bandkörper und die darauf angeordneten abgeflachten Stabenden durchsetzen, auf denen die abgewinkelten Krampenschenkel aufliegen. Diese Art der Stabbefestigung macht von die Stäbe übergreifenden Bügeln keinen Gebrauch, setzt allerdings voraus, dass die Stabenden in vorbereitenden Arbeitsgängen abgeflacht und gelocht werden.

Der Erfindung liegt im wesentlichen die Aufgabe zugrunde, eine feste, wesentlich leichter zu vollbringende Verbindung vorzuschlagen, die nicht zu einer nennenswerten Schwächung der miteinander zu verbindenden Teile führt und vergleichsweise kleine Umlenkradien der Stabbänder zulässt.

Diese Aufgabe wird durch die Merkmale nach dem Kennzeichnungsteil des Anspruchs 1 gelöst.

Demgemäss werden die Stabenden, ohne sie abflachen und lochen zu müssen, zwischen dem quer verlaufenden Bügel und dem Band durch Klemmen gehalten, wobei die Befestigungselemente an den Bügelenden vorzugsweise so stark angezogen sind, dass sich die Stabenden geringfügig in die Bänder eindrücken, und zwar vorzugsweise so, dass auch die Festigkeitsträger des Bandes — meistens ein Textilgewebepaket — eine geringe Wellung erfahren. Dadurch wird die Klemmung und Halterung der Stabenden noch mehr verbessert ; zu dem von den Bügeln herbeigeführten Formschluss kommt noch eine durch die Einbettung in das Band bedingte Formschlüssigkeit und eine elastische Haltekraft als Reaktionskraft aufgrund der Bandverformung. Als Halteelemente kommen bügelähnliche, angespitzte Körper infrage, die ohne weiteres in das Band bzw. sogar noch durch das Band hindurch gestossen werden können ; es ist also nicht erforderlich, das Band vorher zu lochen, es kann also insoweit unpräpariert bleiben. Die V-förmige Anordnung der im Bandkörper befindlichen Krampenabschnitte nimmt dabei auf die Beanspruchung und Verformung der Bänder an den Umlenkstellen Rücksicht.

Weitere Ausgestaltungen der Erfindung ergeben sich aus den Unteransprüchen.

Einzelheiten der Erfindung werden anhand der Zeichnung erläutert, in der Ausführungsbeispiele der Erfindung dargestellt sind. Es zeigen :

Fig. 1    eine Teildraufsicht auf ein Stabband für einen Stabbandförderer einer landwirtschaftlichen Erntemaschine,

Fig. 2    einen Schnitt nach der Linie II-II von Fig. 1,

Fig. 3    einen Schnitt nach der Linie III-III von Fig. 2,

Fig. 4    eine Teildraufsicht auf ein abgewandeltes Stabband und

Fig. 5    einen Schnitt nach der Linie V-V von Fig. 4

Das Stabband des in Richtung des Pfeilps 1 umlaufenden Stabbandförderers weist an beiden Rändern zugfeste, biegsame Bänder 2 auf, die durch quer verlaufende Stäbe 3 aus Stahl miteinander verbunden sind. Die Stäbe 3 fördern einerseits, zum anderen tritt für das Erntegut infolge des gegenseitigen. Abstandes der Stäbe 3 eine Siebung ein.

Die Bänder 2 bestehen aus Gummi oder gummiähnlichen Kunststoffen ; sie haben oben und unten eine Deckschicht aus Gummi und dazwischen mehrere gummierte Gewebelagen, die paketartig zusammengefasst sind.

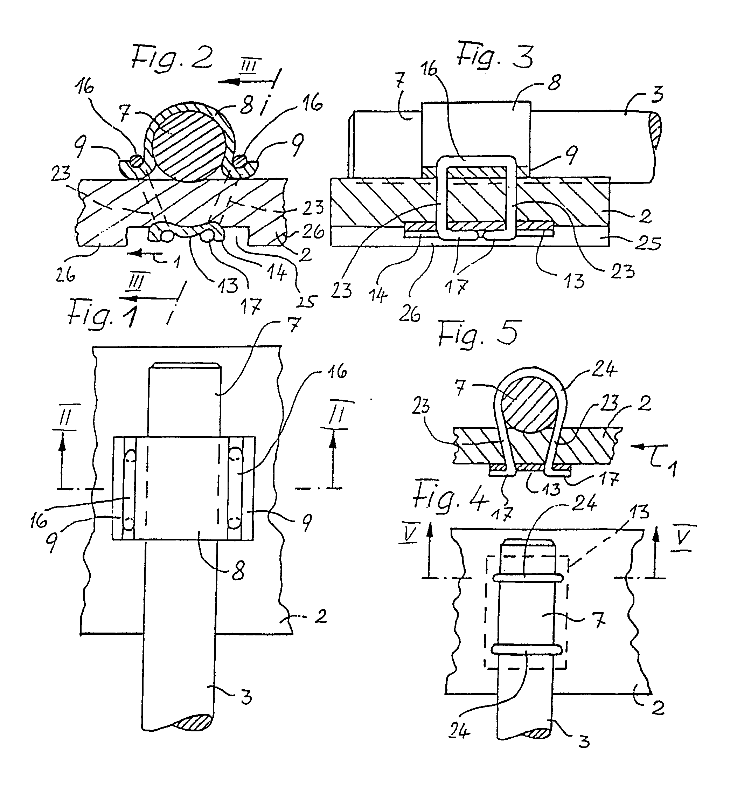

Die aufgrund der Erfindung vorgesehene Befestigung der Stabenden 7 an den Bändern 2 erfolgt mittels eines aus Stahl bestehenden Press- oder Formkörpers, der nachstehend beschrieben wird. Bei Betrachtung des Stabendes 7 im Querschnitt gemäss Fig. 2 ist dieses durch einen Bügel 8 — quer zum Stabende 7 verlaufend — gehalten. Die Enden 9 des Bügels sind abgewinkelt und an ihrer dem Band 2 zugekehrten Seite abgerundet ggfs. ballig gestaltet.

Dem Stabende 7 liegt eine an der Innenseite des Bandes 2 befindliche Platte 13 gegenüber, die den Enden 9 entsprechende Profilierungen mit Abrundungen aufweist ; zwischen den beiden nach innen in Richtung auf das Band 2 vorspringenden Rändern 14 befindet sich ein zurückspringendes Mittelteil.

Wie die Zeichnung offenbart, sind die gegenüberliegenden Enden 9 und die Ränder 14 durch sie durchsetzende Krampen 16 aus hochfestem Stahl verbunden. Die von oben eingetriebenen Krampen 16 weisen zueinander abgebogene, auf den Rändern 14 aufliegende, zugespitzte Enden 17 auf. Alle aussen liegenden Abschnitte dieser Krampen liegen in den vertieften Abschnitten der Teile 9, 14.

Es sei erwähnt, dass die Krampen 16 ohne Materialwegnahme eingepresst werden ; die Stabenden 7 sind unbearbeitet ; Die Stäbe 3 brauchen also nur auf länge gebracht werden ; sie können so zum Einbau benutzt werden. Auch die Bänder 2 bedürfen keiner Vorbereitung (Lochung od. dgl.).

Die Bügel 8 haben dabei eine Breite, die nur etwa ein Drittel der Breite der Bänder 2 entspricht. Besonders wichtig ist zudem die Stellung der sich innerhalb der Bänder 2 befindlichen Abschnitte 23 der Krampen 16. Sie sind v-förmig — in Bezug auf die Stabenden 7 symmetrisch — in der Weise angeordnet, dass der gegenseitige Abstand der Abschnitte 23 der paarweise zusammengehörigen Krampen 16 an der den Stabenden 7 zugekehrten Seite grösser ist als an der den Platten 13 zugekehrten Seite. Dadurch ergeben sich bessere und dauerhaftere Befestigungen auch bei solchen Stabbändern, die über kleine Räder oder Scheiben geführt werden müssen. Infolge der V-Stellung der Abschnitte 23 wird der Verformung und Beanspruchung der Bänder 2 an den Umlenkstellen weitgehend Rechnung getragen.

Um ausserdem bei den vergleichsweise kurzen Bügeln 3 Axialverschiebungen der Stabenden 7 auszuschliessen, werden diese nicht nur aufgrund der Bügel 8 in die Bänder 2 elastisch eingedrückt, vielmehr werden die Bügel 8 auch so gestaltet, dass sie die obere Mantelfläche der Stabenden nicht nur um 180°, sondern um etwa 2/3 ihrer Mantelfläche umschliessen und hier mit dem Stab 3 in Berührung stehen. Die so vergrösserte Anlagefläche der Bügel 8 führt zu einer verbesserten Verankerung der Stabenden 7. Insb. Fig. 1 zeigt diese Gestaltung der Bügel 8.

Eine weiter vereinfachte Befestigung der Stabenden 7 ist in den Fig. 4 und 5 dargestellt. Hier wird auf besondere Bügelkörper verzichtet ; ihre Funktion übernehmen oben U-förmig gestaltete Krampen 24, von denen vorzugsweise immer zwei, ggfs. aber auch weitere einem Stabende 7 zugeordnet werden. Die innerhalb des Bandkörpers befindlichen Abschnitte — auch hier mit 23 bezeichnet — sind ebenfalls v-förmig zueinander angeordnet. Die Enden 17 durchsetzen ebenfalls Platten 13 ; sie können im Sinne von Fig. 5 in Bandlängsrichtung (Pfeil 1) bzw. gegen diese Richtung abgewinkelt sein, aber auch gemäss Fig. 3 etwa parallel zu den Stabenden 7 gerichtet verlaufen.

Es sei noch erwähnt, dass sich gemäss Fig. 1 die Platte 13 innerhalb einer quer verlaufenden Lücke 25 zwischen zwei Zähnen 26 an der Innenseite der Bänder 2 befinden. Zudem können auch die Enden 17 gemäss Fig. 2 in Bandlängsrichtung abgewinkelt sein. Es versteht sich zudem, dass auch hier die Enden 9 elastisch in den Bandkörper eingedrückt sein können.

## Patentansprüche

1. Stabband für Stabbandförderer vorzugsweise an landwirtschaftlichen Maschinen insb. Erntemaschinen mit zwei oder mehreren, umlaufenden, biegsamen, zugfesten Bändern (2), die durch im Abstand voneinander angeordnete, quer zum Stabband angeordnete, aus Stahl od. dgl. bestehende Stäbe (3) verbunden sind, deren Enden (7) durch die Bänder (2) durchsetzende Befestigungselemente (16) an den Bändern (2) befestigt sind, wobei die Stabenden (7) von einem Bügel (8) umschlossen sind, dadurch gekennzeichnet, dass der Bügel (8) von in die unpräparierten Bänder (2) eingetriebenen Befestigungslementen (16) gehalten ist, die eine auf der den Bügeln (8) gegenüberliegenden Seite des Bandes (2) anliegende Platte (13) durchsetzen, mit einer Abwinkelung (17) auf dieser Platte (13) aufliegen und deren im Inneren des Bandes (2) befindliche Abschnitte (23) derart v-förmig angeordnet sind, dass der gegenseitige Abstand paarweise zusammengehöriger Befestigungselemente(16) zu den Stabenden (7) hin grösser ist als zur gegenüberliegenden Bandseite hin (Fig. 2, 5, in Richtung der Stäbe gesehen).

2. Band nach Anspruch 1, dadurch gekennzeichnet, dass die Abschnitte (23) symmetrisch in Bezug auf die Längsmittelachse der Stabenden (7) angeordnet sind (gesehen im Schnitt gemäss Fig. 2 und 5).

3. Band nach Anspruch 1, dadurch gekennzeichnet, dass die Bügel (8) um mehr als 180°, vorzugsweise auf etwa 2/3 des Umfanges der von ihnen gehaltenen Stabenden (7) mit diesen in Berührung stehen.

4. Band nach Anspruch 1, dadurch gekennzeichnet, dass die etwa mittig auf dem Rücken der Bänder (2) angeordneten Bügel (8) sich etwa über 1/3 der Bandbreite erstrecken.

5. Band nach Anspruch 1, dadurch gekennzeichnet, dass die Befestigungselemente (24) die Bügel (8) bilden und die Stabenden übergreifen. (Fig. 5).

6. Band nach Anspruch 5, dadurch gekennzeichnet, dass die Befestigungselemente (24) im wesentlichen U-förmig gestaltet sind, mit ihrem gebogenen Steg die Stabenden (7) übergreifen, mit ihren Schenkeln (23) den Bandkörper durchsetzen und mit den abgebogenen Schenkelenden (17) auf der Platte (13) anliegen.

7. Band nach Anspruch 5, dadurch gekennzeichnet, dass zwei im Abstand voneinander angeordnete Befestigungselemente (24) vorgesehen sind.

## Claims

1. Rod belt for rod belt conveyors, preferably for use with agricultural machines, more especially harvesting machines, comprising two or more circumferential, flexible, substantially inextensible belts (2), which are connected by means of spaced-apart rods (3), which are disposed transversely relative to the rod belt and are formed from steel or the like, the ends (7) of said rods being secured on the belts (2) by means of securing members (16), which extend through the belts (2), the rod ends (7) being surrounded by a clamp (8), characterised in that the clamp (8) is retained by securing members (16), which have been driven into the unprepared belts (2) and extend through a plate (13), which is situated on the side of the belt (2) opposite the clamps (8), such securing members lying with an angled portion (17) on this plate (13) and having portions (23), which are situated in the interior of the belt (2) and are so disposed in a V-shaped manner that the mutual spacing between securing members (16), which belong together in pairs, is greater towards the rod ends (7) than towards the opposite side of the belt (Figs. 2, 5, when viewed with respect to the direction of the rods).

2. Belt according to claim 1, characterised in that the portions (23) are disposed symmetrically relative to the central longitudinal axis of the rod ends (7) (when viewed in cross-section, as shown in Figs. 2 and 5).

3. Belt according to claim 1, characterised in that the clamps (8) are in contact with the rod ends (7) for more than 180°, preferably over substantially 2/3 of the circumference of the rod ends (7) retained by said clamps.

4. Belt according to claim 1, characterised in that the clamps (8), which are disposed substantially centrally on the rear of the belts (2), extend substantially over 1/3 of the belt width.

5. Belt according to claim 1, characterised in that the securing members (24) form the clamps (8) and engage over the rod ends (Fig. 5).

6. Belt according to claim 5, characterised in that the securing members (24) are subtantially U-shaped, engage with their arcuate cross-piece member over the rod ends (7), extend through the belt body with their legs (23) and lie on the plate (13) with the bent leg ends (17).

7. Belt according to claim 5, chracterised in that two spaced-apart securing members (24) are provided.

## Revendications

1. Courroie à barreaux pour des convoyeurs à bande, de préférence sur des machines agricoles, notamment sur des moissonneuses ayant deux ou plusieurs courroies (2) sans fin, souples et résistantes à la traction, qui sont reliées par des barreaux (3) en acier ou analogue disposés à distance les uns des autres et transversalement à la courroie à barreaux, et dont les extrémités (7) sont fixées aux courroies (2) par des éléments de fixation (16) passant à travers les courroies (2), les extrémités (7) des barreaux étant entourées d'un étrier (8), caractérisée en ce que l'étrier (8) est maintenu par des éléments de fixation (16) insérés dans les courroies (2) sans préparation, qui traversent une plaque (13) s'appliquant sur le côté de la courroie (2) opposé à l'étrier (8), qui s'appliquent par une partie coudée (17) sur cette plaque (13) et dont les tronçons (23) se trouvant à l'intérieur de la courroie (2) sont disposés en forme de V, de manière que la distance mutuelle entre les éléments de fixation (16) faisant partie d'un même couple soit plus grande vers les extrémités (7) des barreaux que du côté opposé de la courroie (figures 2, 5, considérée dans la direction des barreaux).

2. Courroie suivant la revendication 1, caractérisée en ce que les tronçons (23) sont disposés symétriquement par rapport à l'axe médian longitudinal des extrémités du barreau (7) (vue en coupe suivant les figures 2 et 5).

3. Courroie suivant la revendication 1, caractérisée en ce que les étriers sont en contact avec les extrémités des barreaux (7) sur plus de 180° et, de préférence, sur environ les 2/3 du pourtour des extrémités de barreaux qu'ils maintiennent.

4. Courroie suivant la revendication 1, caractérisée en ce que les étriers (8) disposés à peu près au milieu sur la partie arrière des courroies (2) s'étendent environ sur le tiers de la largeur de la courroie.

5. Courroie suivant la revendication 1, caractérisée en ce que les éléments de fixation (24) forment les étriers (8) et recouvrent les extrémités des barreaux (figure 5).

6. Courroie suivant la revendication 5, caractérisée en ce que les éléments de fixation (24) sont sensiblement en forme de U, leur âme incurvée recouvrant les extrémités des barreaux (7) et leurs branches (23) traversant le corps de la courroie, les extrémités des branches (17) recourbées s'appliquant sur la plaque (13).

7. Courroie suivant la revendication 5, caractérisée en ce qu'il est prévu deux éléments de fixation (24) disposés à distance l'un de l'autre.

Fig. 2

Fig. 3

Fig. 1

Fig. 5

Fig. 4